# EUROPÄISCHE PATENTANMELDUNG

(11) **EP 0 536 439 A1**
(43) Veröffentlichungstag der Anmeldung: **14.04.1993**
(21) Anmeldenummer: 91117292.2
(22) Anmeldetag: 10.10.1991
(51) Int. Cl.: F16F 3/08, F16F 1/36

(54) **Federnder Dämpferkörper**

(71) Anmelder: WESTLAND GUMMIWERKE GmbH & Co., D-49324 Melle (DE)
(72) Erfinder: Kallweit, Jürg-Heinrich, Prof. Dr., W-4500 Osnabrück (DE); Siebert, Achim, W-4520 Melle 5 (DE)
(74) Vertreter: Jaeger, Klaus, Dr.

(57) **Zusammenfassung**

Der federnde Dämpferkörper zur Verwendung insbesondere als Anschlagpuffer, bei entsprechender Ankopplung von Anschlußstücken (6,7) jedoch auch unter Zug und Torsion belastbar, ist als formschlüssige oder stoff- und gleichzeitig formschlüssige Verbundstruktur aus mindestens zwei Teilkörpern (9,10) aufgebaut, nämlich aus mindestens einem ersten Teilkörper (9) aus einem geschäumten oder ungeschäumten Elastomer mit hoher Elastizität und geringer bis fehlender Dämpfung ("Federelement") und mindestens einem zweiten Teilkörper (10) auf einem geschäumten oder ungeschäumten Elastomer mit geringer oder praktisch fehlender Elastizität und möglichst hoher Dämpfung ("Dämpferelement").

## Beschreibung

Die Erfindung betrifft einen federnden Dämpferkörper sowie unter Verwendung dieser Dämpferkörper hergestellte Dampfer, speziell Anschlagpuffer.

Aufgrund ihrer Rückstellkraft werden vulkanisierte Elastomere in der Technik als Federwerkstoff eingesetzt. Dabei nimmt die Nachfrage nach weichen Elastomerfederelementen zu. Vor allem bei Belastung mit Schwingungen großer Amplituden und beim Abfedern von Stößen mit großen Impulsen im Vergleich zu den Federkenndaten wirken sich jedoch bei einem Einsatz weicher Elastomerfedern die langen Federwege und die hohe Rückstellelastizität als Störschwingungsgenerator nachteilig aus.

Weiterhin bekannt sind formulierte und vernetzte Elastomere, die insbesondere aufgrund polarer Strukturen oder durch die Gegenwart spezieller Additive kaum elastisch, dafür jedoch hoch dämpfend wirken. Nachteilig an diesen elastomeren Dämpferwerkstoffen ist ihre nahezu vollständig fehlende Elastizität, d.h. ihre große Federhärte. Elastomerdämpfer haben daher in der Praxis kaum Bedeutung erlangt.

Schließlich sind zahlreiche Versuche bekannt, durch Covulkanisieren, durch Copolymerisieren oder durch bloßes Mischen federnder und dämpfender Elastomerkomponenten Werkstoffe zu schaffen, die in jeweils anwendungsgerechter Kombination federnde und dämpfende Kenndaten aufweisen. Eine ungenügende Flexibilität in der Einstellung eines benötigten Kennlinienverlaufs und eine ungenügende Einsatzbeständigkeit der so erhaltenen Werkstoffe haben bislang ihren umfangreichen praktischen Einsatz verhindert. Zudem lassen sich durch solche Werkstoffmodifizierungen weiche Federn nicht ausreichend dämpfen und Dämpfer nicht ausreichend elastisch einstellen.

Ausgehend von diesem Stand der Technik liegt der Erfindung die Aufgabe zugrunde, einen elastomeren Dämpferkörper zu schaffen, der leicht einstellbar, exakt reproduzierbar, beständig und kostengünstig mit einer jeweils anwendungsgerechten praktisch beliebig großen Elastizität ausgerüstet werden kann.

Zur Lösung dieser Aufgabe schafft die Erfindung einen federnden Dämpferkörper, speziell federnden Stoßdämpferkörper, der die im Anspruch 1 genannten Merkmale aufweist.

Gegenstand der Erfindung sind weiterhin federnde Dämpfer auf der Basis solcher Dämpferkörper, und zwar speziell federnde Anschlagpuffer.

Wesentliches Merkmal der federnden Dämpferkörper ist also, daß diese aus zwei diskreten Teilkörpern bestehen, nämlich zum einen aus einem federnden Elastomerkörper mit hoher Elastizität und geringer Dämpfung ("Federelement"), und zum anderen aus einem dämpfenden Elastomerkörper ("Dämpferelement") mit geringer Elastizität und hoher Dämpfung. Das Federelement weist also typischerweise lange weiche Einfederwege bei idealerweise über einen weiten Bereich nahezu linearen Kennlinienverlauf auf, während das Dämpferelement im Arbeitsbereich im Kraft-Weg-Diagramm unter Stoßbelastung beim Einfedern eine von Anfang an steile progressive Kennlinie mit abruptem Abfall bei Aufhebung der Belastung und entsprechend großer Hysteresefläche aufweist.

Im federnden Dämpferkörper gemäß der Erfindung sind diese beiden Teilkörper, nämlich das Federelement und das Dämpferelement, zu einer integralen Verbundstruktur miteinander verbunden. Dieser Verbund kann dabei prinzipiell sowohl stoffschlüssig als auch formschlüssig erfolgen. Insbesondere Dämpferkörper, die höheren dauerdynamischen oder höheren Stoßbelastungen ausgesetzt werden sollen, erfolgt der Verbund zwischen Federelement und Dämpferelement des federnden Dämpferkörpers gemäß der Erfindung vorzugsweise stoff- und formschlüssig zugleich.

Als stoffschlüssiger Verbund kommen insbesondere Verklebungen oder ein Anvulkanisieren oder Grenzflächen-Covulkanisieren der beiden Teilkörperelastomeren in Betracht. Ein solcher Stoffschluß wird dabei vorzugsweise dadurch herbeigeführt, daß einer der beiden Teilkörper als Einlegeteil, insbesondere Formkern oder Hülse, bei der Herstellung des anderen Teilkörpers durch beispielsweise Spritzgießen, Transferpressen oder vergleichbaren Verfahren eingesetzt wird. Bei der in-situ-Vulkanisation der in das mit dem Einlegeteil versehenen Formwerkzeug für den zweiten Teilkörper eingebrachten Elastomermischung werden fast immer ausreichend feste Covulkanisationen im Grenzflächenbereich der beiden elastomeren Teilkörper erzielt. Kritische Bindungssituationen können dabei in an sich bekannter und gebräuchlicher Weise durch Grundierungen, Oberflächenmodifizierungen oder äquivalente Maßnahmen überbrückt werden.

Formschlüssige Verbindungen werden in ebenfalls üblicher Weise durch nut-feder-artige Formhinterschnitte erzielt. Diese Hinterschnitte können dabei nach vollständig separater Vorfertigung der beiden Teilkörper nach elastischer Verformung der Teilkörper zum Eingriff gebracht werden oder analog zum vorstehend für den Stoffschluß beschriebenen Verfahren dadurch hergestellt werden, daß einer der beiden Teilkörper des federnden Dämpferkörpers im jeweils anderen Teilkörper durch Einspritzen, Einschäumen oder in entsprechend anderer Verfahrensweise hergestellt wird, wobei gleichzeitig der vorstehend beschriebene Stoffschluß erfolgen kann, bei ausreichendem Hinterschnitt jedoch nicht unbedingt erfolgen muß. Insbesondere im Hinblick auf die Recycling-Wirtschaft wird ein einfach, vollständig und sauber im Bedarfsfall wieder trennbarer Verbundkörper einem stoffschlüssigen Verbundkörper vorzuziehen sein. Der Stoffschluß kann dabei durch entsprechende, dem Fachmann ausreichend bekannte Maßnahmen der Oberflächenbehandlung des Formwerkzeug-Einlegeteils, nämlich des ersten Teilkörpers, unterbunden werden.

Dabei können sowohl das Federelement als auch das Dämpferelement jeweils unabhängig voneinander und wahlweise je nach dem Anforderungsprofil des speziellen Einsatzgebietes ungeschäumt oder geschäumt ausgebildet sein. Insbesondere für die Federelemente empfehlen sich geschlossenzellig geschäumte Elastomere oder anderweitig geometrisch-konfigurativ geschwächte Elastomerkörper, insbesondere Lochgummistrukturen.

Der Verbund der beiden Teilkörper des federnden Dämpferelements gemäß der Erfindung kann dabei sowohl in der Weise erfolgen, daß wirkungsmäßig eine Reihenschaltung einer Feder und eines Dämpfers, als auch eine Parallelschaltung einer Feder und eines Dämpfers realisiert wird. Für einen beispielsweise zylindrischen Modell-Dämpferkörper kann eine "Reihenschaltung" der dämpfenden und federnden Teilkörper in einfacher Weise beispielsweise dadurch erhalten werden, daß mehr oder minder ausgeprägt scheibenförmige oder, bezogen auf die Höhe, zylindrische Trommelelemente in Richtung der Zylinderhöhe gestapelt und miteinander formschlüssig, beispielsweise durch Zapfen-Loch-Eingriffe, und/oder stoffschlüssig, beispielsweise durch Verkleben, miteinander verbunden werden. Für einen Modell-Dämpferkörper von gleicher zylindrischer Gestalt läßt sich wirkungsmäßig eine "Parallelschaltung" des Federelements und des Dämpferelements in einfacher Weise dadurch bewerkstelligen, daß beide Teilkörper im Verbund coaxial zueinander ausgerichtet sind. So kann das Dämpferelement beispielsweise als Seele eines hohlzylindrischen Federkörpers oder, alternativ, als umschließender Mantel eines vollzylindrischen Federelementes ausgebildet sein. Dabei ist dem Fachmann sofort ersichtlich, daß beide zuletzt genannten Alternativen einer wirkungsmäßigen Parallelverknüpfung des Federelements und des Dämpferelements des federnden Dämpferkörpers gemäß der Erfindung deutlich voneinander abweichende Kennlinien im Kraft-Weg-Diagramm aufweisen, da das Dämpferelement in unterschiedlicher Weise auf den Formfaktor des Federelements einwirkt. Ebenso ersichtlich ist, daß diese beiden hier als Modell gedachten Varianten des federnden Dämpferkörpers mit den unterschiedlichen Realisierungen der Parallelschaltung des Federelements und des Dämpferelements signifikant abweichende Kennlinien gegenüber einer Parallelschaltung entsprechender Teilelemente ohne gegenseitige Wechselwirkung aufweist. Mit anderen Worten, eine parallelgeschaltete Verbundstruktur, nämlich der federnde Dämpferkörper gemäß der Erfindung, weist in synergistischer Wirkungsweise ein wesentlich anderes Kennlinienfeld auf als beispielsweise identisch strukturierte und bemessene Teilkörper, die axial parallel zueinander, einander aber nicht berührend zwischen einem gemeinsamen Widerlageranschluß und einem gemeinsamen Auflageranschluß eingebunden sind.

Entsprechendes gilt für eine in axialer Richtung insbesondere mehrfache alternierende Schichtung von Federelementen und Dämpferelementen im vorstehend gedachten zylindrischen Modell-Dämpferkörper, also für eine Serienschaltung der Teilkörper des Dämpferkörpers. Durch den flächig wirkenden form- und/oder stoffschlüssigen Verbund der Dämpferschichtelemente mit den Federschichtelementen wird ebenfalls eine unmittelbare und relevante Beeinflussung der Querverformbarkeit der Federelemente des Verbundkörpers erzielt, die zu synergistischen Kennlinienverläufen und nicht zu bloß additiven Kennlinienverläufen führt.

Speziell für die Herstellung des Dämpferelementes des federnden Dämpferkörpers gemäß der Erfindung geeignete elastomere Werkstoffe mit ausgeprägt hoher Dämpfung sind Gegenstand des Unteranspruchs 2. Spezielle Beachtung verdient dabei das Polynorbornen, genauer gesagt, auf der Basis von Polynorbornen vulkanisierte elastomere Werkstoffe, die im Kraft-Weg-Diagramm für Elastomere ungewöhnlich großflächige Hystereseschleifen aufweisen, also für Elastomere ungewöhnlich gute Dämpfer sind.

Gegenstand des Unteranspruchs 3 sind die dort genannten elastomeren Werkstoffe, die bevorzugte Werkstoffe zur Herstellung des Federelements im federnden Dämpferkörper gemäß der Erfindung sind. Bei der im Anspruch 3 genannten Liste ist dabei zu beachten, daß Polynorbornen bei entsprechender Mischungseinstellung auch als elastisches Elastomer eingesetzt werden kann. Um dies zu erreichen, muß das Polynorbornen mit unpolaren Weichmachern formuliert werden.

Bevorzugte Werkstoffkombinationen sind Gegenstand des Unteranspruchs 4. Der federnde Dämpferkörper gemäß der Erfindung besteht demnach vorzugsweise aus einem Dämpferelement aus einem ungeschäumten elastomeren Werkstoff auf der Basis von Polynorbornen oder aus einem geschäumten Halogenbutylkautschuk, und das Federelement des Verbundkörpers aus einem insbesondere geschäumten Elastomer auf der Basis von Naturkautschuk.

Gegenstand des Anspruchs 5 ist eine konstruktive Ausgestaltung des federnden Dämpferkörpers dergestalt, daß ein vorzugsweise zylindrisch oder prismatisch ausgebildetes Federelement mantelartig von einem Dämpferelement umschlossen ist, dessen Wandstärke nicht größer als 20 %, vorzugsweise nicht größer als 15 % des Durchmessers des Federelementes ist, bzw., wenn dieses ein polygonales Querschnittsprofil aufweist, nicht größer als 20 %, insbesondere nicht größer als 15 % des Durchmessers des kleinsten Kreises ist, der die Querschnittsfläche des Federelements einschließt. Optimale Ergebnisse wurden dabei für Mantelverbundkörper erzielt, bei denen das den Mantel bildende Dämpferelement eine Wandstärke von 10 % des Durchmessers des zylindrischen Federkerns aufweist, der entweder aus geschäumten Weichpolyurethan oder aus einem ungeschäumten oder geschäumten oder konfigurativ weichen Naturkautschuk, bzw. einem Elastomer auf der Basis einer Naturkautschukmischung, besteht.

Die vorstehend beschriebenen zylindrischen Verbundkörper können dabei ebenso wie alle anderen zylindrischen oder prismatischen Dämpferkörper auch in der Weise aufgebaut sein, daß sie alternierend aus mehreren, miteinander flächenbündig verbundenen konzentrisch zueinander angeordneten Mantelteilelementen bestehen. Auch in einem solchen federnden Dämpferkörper sind die einzelnen Dämpferelemente und Federelemente nach Art einer Parallelschaltung miteinander gekoppelt. Dämpfer dieser Art werden vorzugsweise nicht für axiale, sondern für radiale Belastungen ausgelegt, insbesondere also beispielsweise für elastische Buchsen, verwendet. Dabei ist jedoch zu beachten, daß die einzelnen Teilkörper bei axialer Belastung eines solchen federnden Dämpferkörpers nach Art eines parallel wirkenden Verbundes wirken, also dementsprechende Kennlinien aufweisen, während derselbe federnde Dämpferkörper bei Verwendung als Radiallagerbuchse Kennlinien zeigt, die einer Reihenschaltung seiner Teilelemente entsprechen. Soll für ein Radialbuchsenlager ein Kennliniensatz generiert werden, der Merkmale der Parallelschaltung der einzelnen Dämpferelemente und Federelemente des federnden Dämpferkörpers entsprechen, so sind diese einzelnen Teilelemente radial ausgerichtet, also speichenartig, anzuordnen.

Unabhängig von der vorstehend beschriebenen Konfiguration der federnden Dämpferkörper selbst, können diese beim Aufbau von Dämpfern für die industrielle Praxis noch einmal mit vorgeschalteten oder nachgeschalteten Dämpferelementen oder vorgeschalteten oder nachgeschalteten Federelementen zu einem komplexen Wirkungselement verbunden werden, das dann die gezielte Einstellung auch ausgefallener Kennlinienprofile ermöglicht. Im Rahmen dieser Kombinationsmöglichkeiten beim Aufbau von Dämpfern aus den Dämpferkörpern gemäß der Erfindung hat sich als besonders effektiv eine Reihenschaltung aus einem Dämpferkörper in Reihenschaltung der Dämpferelemente und Federelemente mit einem Dämpferkörper in Parallelschaltung mit den Teilkörperelementen erwiesen. Mit anderen Worten, nach einer Ausgestaltung der Erfindung, die Gegenstand des Unteranspruchs 7 ist, ist ein aus Dämpferkörpern gemäß der Erfindung aufgebauter federnder Dämpfer gekennzeichnet durch eine Reihenschaltung eines Dämpferkörpers in MAXWELL-Schaltung seiner Teilkörper mit einem Dämpferkörper in VOIGT-KELVIN-Schaltung seiner einzelnen Teilkörper. Dieser Aufbau erfolgt dabei vorzugsweise nicht durch ein Stapeln oder Schichten oder koaxiales Auffädeln beider Teilkörper, sondern durch einen integralen Wirkungsverbund, beispielsweise also durch eine Covulkanisation der beiden Dämpferkörper.

Da hinsichtlich einer Beständigkeit gegenüber Umgebungseinwirkungen, beispielsweise also der Einwirkung von Ozon, Spritzwasser, Salzen oder salzhaltigem Wasser oder Ölen in aller Regel die als Dämpfermaterial verwendeten Elastomeren bessere Kenndaten als die Werkstoffe aufweisen, aus denen die Federelemente des Dämpferkörpers bestehen, werden die Federkörper für Dämpfer, die in solcherart korrosionsgefährdeten Anwendungsbereichen eingesetzt werden sollen, vorzugsweise so aufgebaut, daß ein Dämpferhüllenelement oder ein Dämpfermantelelement das weiche Federelement vollständig oder doch zumindest angriffsseitig vollständig umschließt oder verkapselt. Solche Konstruktionen werden sich immer dann empfehlen, wenn die Dämpfer speziell als Anschlagpuffer im Automobilbereich eingesetzt werden sollen.

Weitgehend unabhängig davon, wie die Dämpferkörper und die unter deren Verwendung hergestellten Dämpfer selbst im einzelnen strukturiert sind, sind die Federelemente vorzugsweise so vom Werkstoff her eingestellt oder konstruktiv so konfiguriert, daß sie im bestimmungsgemäßen Arbeitsbereich einen Federweg von mindestens 50 %, insbesondere einen Federweg im Bereich von 60 % bis 80 %, bezogen auf die Bauhöhe des unbelasteten und ungedämpften Federelementes, aufweisen. Dieser Arbeitsbereich ist dabei durch die für den geplanten Einsatzzweck des Dämpfers bzw. des Dämpferkörpers vorgesehene Lastamplitude bestimmt. Diese Lastamplitude ist ihrerseits im Falle der Dämpfer üblicherweise eine zu absorbierende Stoßamplitude, kann aber bei stärkerer Betonung der Federeigenschaften des Dämpfers durchaus auch eine nach vorgegebener Spezifikation zu dämpfende dynamische Schwingungsamplitude, meist Störschwingungsamplitude, sein.

Die Erfindung ist im folgenden anhand von Beispielen näher erläutert. Es zeigen:
- Fig. 1: ein Kraft-Weg-Kennlieniendiagramm ungedämpfter und gedämpfter federnder Probekörper; und
- Fig. 2: einen Dämpfer gemäß der Erfindung.

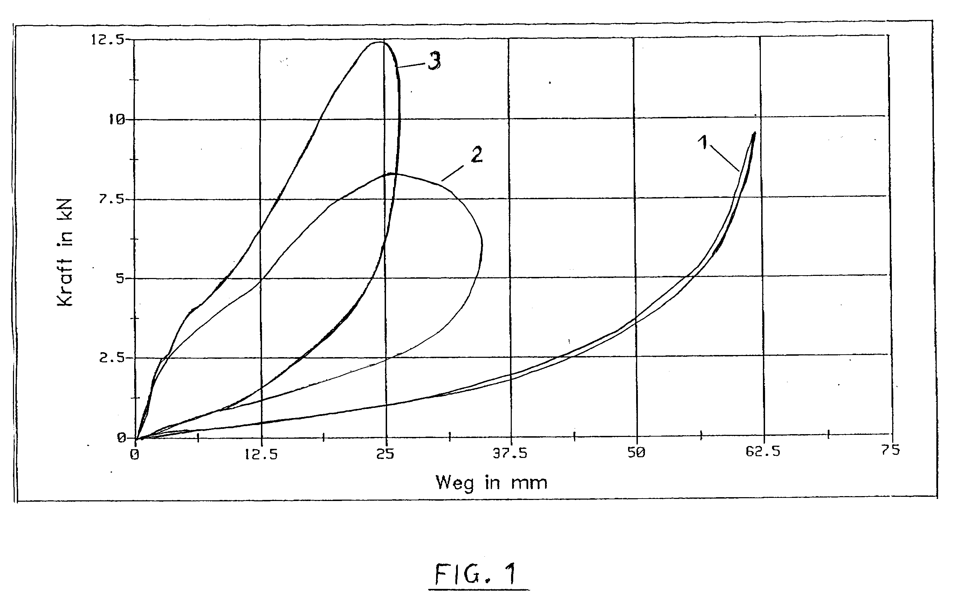

In dem in Fig. 1 gezeigten Kraft-Weg-Diagramm beziehen sich die dargestellten Kennlinien 1, 2, 3 auf Fallbär-Messungen an vollzylindrischen Probekörpern auf Naturkautschukbasis mit einer Höhe von 100 mm und einem Durchmesser von 70 mm. Die Kennlinie 1 zeigt die für den Probekörper allein aufgenommenen Meßwerte, während die Kennlinie 2 die Meßdaten darstellt, die für den gleichen Probezylinder erhalten werden, wenn dieser mit einem 7 mm dicken zylindrischen Mantel von gleicher Höhe wie der Federzylinder, nämlich 100 mm, umschlossen ist, wobei dieser Dämpfermantel aus einem Dämpferelastomer auf Polynorbornenbasis mit polarem Weichmacher und einer Härte von 39 Shore A besteht. Die Kennlinie 3 ist an einem zylindrischen Probekörper der gleichen Art aufgenommen, an dem auch die Kennlinie 2 aufgenommen worden ist, wobei für die Kennlinie 3 jedoch die Mantelstärke des Dämpferelastomers 10 mm beträgt.

Bei den federnden Dämpferkörpern, an denen die Kennlinien 2 und 3 aufgenommen worden sind, besteht zwischen dem Dämpfermantel und dem Federkern des Dämpferkörpers kein Stoffschluß. Die Dämpfermäntel und der Federkern sind separat vorgefertigte Teile, wobei die Dämpfermäntel unter radialer Aufweitung auf den weichen Federkern aufgespannt sind. Die axiale formschlüssige Fixierung erfolgt durch einen Ringnut-Ringflansch-Eingriff.

Der Kennlinie ist zu entnehmen, daß der ungedämpfte weiche Federkörper erwartungsgemäß ein nahezu linear elastisches Ver halten mit praktisch nicht ins Gewicht fallender Dämpfung und dem üblichen abschließenden Progressionsbereich zeigt.

Demgegenüber zeigt die Kennlinie 2 die auf den Polynorbornen-Dämpfermantel zurückzuführende große Hysteresefläche, also hohe Dämpfung, die jedoch im Gegensatz zum reinen Dämpferelastomer durch die Wirkung des weichen Federkerns insgesamt für einen Dämpfer außerordentlich weich abgefedert ist.

In der aus der Kennlinie 3 entnehmbaren Weise führt dann eine Verstärkung des Dämpfermantels bei im wesentlichen gleichbleibender Dämpfungsarbeit zu einer deutlichen Verhärtung der Dämpferkennlinie. Dabei zeigt jedoch auch die Dämpferkennlinie 3 noch eine signifikante Abfederung der Stoßamplitude gegenüber einem in der Figur aus Gründen der Übersichtlichkeit nicht dargestellten reinen Polynorbornenprobenkörper, dessen entsprechende Kennlinie bei fast senkrechtem Abfall des Rückstellteils des Kennlinienverlaufs noch wesentlich steiler als die in der Fig. 1 gezeigte Kennlinie 3 des noch federnd erweichten Probenkörpers verläuft.

Im einzelnen können die für den jeweiligen Einsatzzweck des federnden Dämpfers benötigten und durch diesen Einsatzzweck vorgegebenen Kennlinien dadurch praktisch beliebig konfiguriert werden, daß die Materialkenndaten, insbesondere Härten und Federwege der Dämpferelemente und der Federelemente zielentsprechend in an sich dem Fachmann bekannter Weise aufeinander abgestimmt und eingestellt werden, daß die Dämpferkörper entsprechend geometrisch konfiguriert werden, insbesondere also wirkungsmäßig in Reihenschaltung oder Parallelschaltung oder Kombination beider Schaltungen aufgebaut werden und in welchen Stärken die einzelnen Elemente relativ zueinander abgestimmt werden. Grundsätzlich läßt sich dabei durch eine Serienschaltung des Federelementes und des Dämpferelementes der Einsatz der Dämpferwirkung bei vor-, nach- oder zwischengeschaltetem Federverhalten des federnden Dämpferkörpers bestimmen, während die Parallelschaltung schwerpunktmäßig eher eine Federmodifizierung der durch das Dämpferelastomer verfüg baren Dämpfungsarbeit ermöglicht. Dabei können jedoch beide Schaltprinzipien durchaus zusammenwirkend in den Dämpferkörpern ausgebildet sein, so daß für entsprechend konfigurierte Dämpferkörper mit nur wenigen Versuchen praktisch beliebig vorgegebene Kennlinien realisierbar sind.

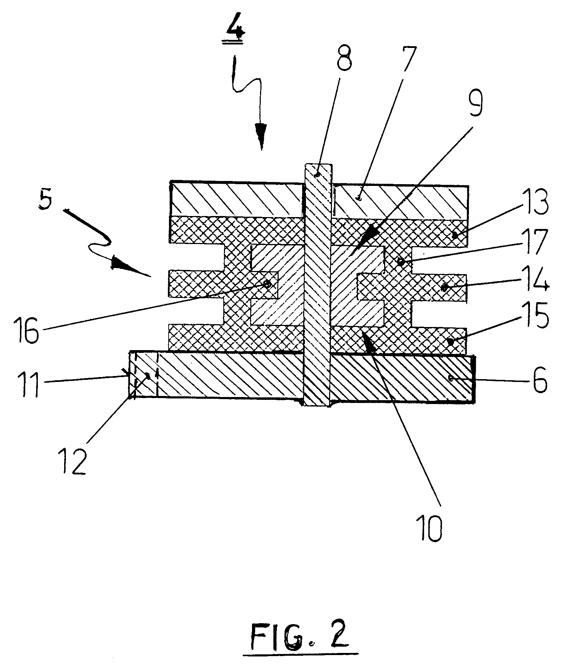

Im Detail ist eine solche konfigurative Abstimmung eines Dämpferkörpers an dem in Fig. 2 dargestellten Ausführungsbeispiel erläutert.

Das in der Fig. 2 im Axialschnitt dargestellte Ausführungsbeispiel der Erfindung zeigt im Axialschnitt einen federnden Dämpfer 4, der aus einem federnden Dämpferelement 5, einem Widerlageranschlußstück 6, einem Auflageranschlußstück 7 und einer Führungsstange 8 besteht. Der federnde Dämpferkörper 5 besteht aus einem Federelement 9, das beispielsweise aus einem insbesondere geschäumten Elastomer auf Naturkautschukbasis oder auf Weichpolyurethanbasis bestehen kann, das vollständig von einem mantelartig ausgebildeten Dämpferelement 10 umschlossen ist, das seinerseits aus einem hochdämpfenden Elastomer auf Polynorbornenbasis besteht. Das Polynorbornen ist mit einem polaren Weichmacher gefüllt und auf eine Härte von 45 Shore A eingestellt.

Die beiden Anschlußstücke, nämlich das Widerlageranschlußstück 6 und das Auflageranschlußstück 7, bestehen aus Metall und sind in üblicher Metall-Elastomer-Verbundtechnik flächenbündig mit dem Dämpferelement 10 stoffschlüssig verbunden.

Die zentrale Führungsstange 8 ist fest mit dem Widerlageranschlußstück 6 verbunden und durchsetzt den federnden Dämpferkörper 5 und das Auflageranschlußstück 7 mit Spielpassung axial verschiebbar.

Drei Nasen 11 mit Bohrungen 12, die am Widerlageranschlußstück 6 vorspringen, dienen der Halterung des in Fig. 2 gezeigten, als federnder Anschlagpuffer einsetzbaren federnden Dämpfers 4.

Das Federelement 9 und das Dämpferelement 10 des federnden Dämpferkörpers 5 sind lediglich durch Formschluß, nicht durch Stoffschluß miteinander verbunden, so daß der Dämpferkörper 5 ohne weiteres recyclebar ist.

Zur Herstellung des federnden Dämpferkörpers 5 wird zunächst das mantelartige Dämpferelement 10 als separates Formteil hergestellt. Anschließend wird der Federkörper 9 in den im Inneren des becherartigen Manteldämpferelementes 10 eingeschäumt, das heißt in situ durch Verschäumen und Polymerisieren hergestellt. Dabei werden die Reaktionssysteme, die Oberflächenbedingungen und die Reaktionstemperatur so gewählt, daß über die Trennflächen praktisch kein Stoffschluß stattfindet.

Der zylindermantelartig ausgebildete Dämpferelastomermantel ist an seinen beiden axialen Stirnseiten bis auf die Öffnung für den Durchtritt der Führungsstange 8 vollkommen geschlossen. Der so stirnseitig geschlossene Dämpferelastomermantel weist drei auswärts vorspringende Flanschringe 13,14,15 und einen nach radial einwärts vorspringenden Innenflanschring 16 auf.

Bei dem Auftreten einer axialen entweder variabel quasi statischen Last, einer Stoßamplitude oder einer dynamischen Wechselbelastung werden die tragenden zylindrischen Bereiche des Federelements 9 und des Dämpferelements 10, bezogen auf den Dämpfer 4, axial komprimiert. Dabei verformen sich das Federelement 9 und die zylindrischen Abschnitte des Dämpferelements 10 integral gemeinsam unter radialer Ausbauchung. Bei diesem Prozeß, der wirkungsmäßig einer Parallelschaltung des Federelements 9 und des Dämpferelements 10 des federnden Dämpferkörpers 5 entspricht, wird eine gegenüber einem rein zylindrischen Dämpferelastomermantel ansonsten gleicher Abmessungen durch die mittlere Flanschringstruktur 14,16 eine Formversteifung des Federelements 9 und damit eine härtere Einstellung der Gesamtcharakteristik des Dämpferkörpers 5 erreicht.

Die geometrische Versteifung des federnden Dämpferkörpers 5 und die Materialkenndaten des Federelements 9 und des Dämpferelements 10 sind dabei so eingestellt, daß bei Belastungen innerhalb eines vorgegebenen Arbeitsbereiches keine Berührung zwischen den Außenflanschringen 13,14,15 stattfindet, so daß also in diesem Bereich eine Gesamtkennlinie für den Dämpfer erhalten wird, die einer weitgehend rein parallelen Schaltung (VOIGT-KELVIN-Schaltung) entspricht, wenn von einem sekundären seriellen Vordämpfungseffekt abgesehen wird, der durch eine Eingangskompression insbesondere der stirnseitigen scheibenförmigen Abschnitte des Dämpferelements 10 hervorgerufen wird.

Bei großen und übergroßen Krafteinwirkungen oder übergroßen Stoßamplituden kann der Dämpferkörper 5 des in Fig. 2 gezeigten Dämpfers 4 jedoch soweit komprimiert werden, daß die Außenflanschbereiche 13,14,15 mit zunehmender Flächenbündigkeit unmittelbar aufeinangepreßt werden. Dies führt zu einer effektiven Vergrößerung des Querschnitts der axial durchgehenden tragenden zylindrischen Dämpfersäule, was in der Kennlinie wirkungsmäßig einem progressiven Zuschalten eines seriell nachgeschalteten Dämpfers entspricht. Beim Auftreten solcher Grenzstoßbelastungen wird der Dämpfer also den Stoß zunächst vergleichsweise weich abfedernd, aber gleichzeitig stark dämpfend aufnehmen und erst unmittelbar vor dem formschlüssigen und starren Endanschlag eine stark progressive praktisch ungefederte Dämpfung aufweisen.

Im Ergebnis stellt die in Fig. 2 gezeigte Ausführung des federnden Dämpfers mit dem Dämpferkörper 5 gemäß der Erfindung also einen unter Normalbedingungen zunächst weich gefedert stark dämpfenden Anschlagpuffer dar, der bei übergroßen Belastungen, insbesondere übergroßer Stoßbelastung vor Erreichen eines inkompressiblen formschlüssigen Anschlags einen stark progressiv wirkenden Dämpfer zuschaltet. Derart komplizierte und auf bestimmte Einsatzbereiche genau abstimmbare und mit einfachsten Mitteln einstellbare Kennlinien sind derzeit nur mit großem mechanischen Aufwand und für die Serienfertigung nicht realisierbarem Kostenaufwand herstellbar.

Für den Fachmann ohne weiteres erkennbar, kann der in Fig. 2 dargestellte federnde Dämpfer ohne weiteres auch auf Zug und Torsion belastet werden.

Anschlagpuffer der in Fig. 2 dargestellten Art lassen sich insbesondere in Kombination mit klassischen Stahlfeder-Stoßdämpfern als Grenzanschlagpuffer verwenden, und zwar insbesondere im Zusammenhang mit gebräuchlichen Teleskopstoßdämpfern für Radaufhängungen. Dabei lassen sich die heute insbesondere für die Kraftfahrzeug-Teleskopdämpfer als Endanschlagfedern verwendeten geschäumten Polyurethanfedern in einfacher Weise dadurch in effektive federnde Dämpfer umgestalten, daß ein becherförmiges Dämpferelement mit einer Innenkontur hergestellt wird, das mit geringem Untermaß, das heißt mit einem Untermaß von linear bis zu ungefähr 10 %, exakt der Außenkontur üblicher geschäumter Polyurethanfedern entspricht. Dieser Becher kann dann entweder als separat gefertigtes Teil auf die PU-Federkerne aufgespannt werden, oder aber, alternativ, können die PU-Federkerne in die vorgefertigten Becher eingeschäumt werden. Die durch diesen Ummantelungsprozeß und das für den Dämpfermantel benötigte Material entstehenden Mehrkosten des Anschlagpuffers werden dabei durch eine spürbar verlängerte Standzeit des Anschlagpuffers und einen wesentlich erhöhten Komfort des Teleskopfederstabs weit überkompensiert.

## Patentansprüche

1. Federnder Dämpferkörper (5), insbesondere Anschlagpuffer,
**gekennzeichnet** durch
eine stoffschlüssige oder formschlüssige oder stoff- und formschlüssige Verbundstruktur aus mindestens einem ersten Teilkörper aus einem geschäumten oder ungeschäumten Elastomer mit hoher Elastizität und geringer Dämpfung ("Federelement") (9) und mindestens einem zweiten Teilkörper aus einem geschäumten oder ungeschäumten Elastomer mit geringer Elastizität und hoher Dämpfung ("Dämpferelement") (10).

2. Federnder Dämpferkörper nach Anspruch 1,
dadurch **gekennzeichnet,**
dass das Dämpferelement (10) aus einem elastomeren Werkstoff auf der Basis von Polynorbornen, Butylkautschuk, halogeniertem Butylkautschuk, 3,4-Polyisopren oder Nitrilbutadien als polymerer Hauptkomponente besteht.

3. Federnder Dämpferkörper nach einem der Ansprüche 1 oder 2,
dadurch **gekennzeichnet,**
dass das Federelement (9) aus einem elastomeren Werkstoff auf der Basis von Naturkautschuk, einem Gemisch aus Naturkautschuk mit thermoplastischen Komponenten, von geschäumtem Polyurethan, Urethankautschuk, Polynorbornen mit unpolaren Weichmachern, von Silikonkautschuk, Ethylen-Propylen-Kautschuk oder Styrol-Butadien-Kautschuk als polymerer Hauptkomponente besteht.

4. Federnder Dämpferkörper nach einem der Ansprüche 1 bis 3,
dadurch **gekennzeichnet,**
dass das Dämpferelement (9) aus einem ungeschäumten elastomeren Werkstoff auf der Basis von Polynorbornen oder aus einem geschäumten Halogenbutylkautschuk und das Federelement (10) aus einem geschäumten Elastomer auf der Basis von Naturkautschuk bestehen.

5. Federnder Dämpferkörper nach einem der Ansprüche 1 bis 4,
dadurch **gekennzeichnet,**
dass ein insbesondere zylindrisch oder prismatisch ausgebildetes Federelement (9) mantelartig von einem Dämpferelement (10) umschlossen ist, dessen Wandstärke nicht grösser als 20%, insbesondere nicht grösser als 15% des Durchmessers des kleinsten Kreises ist, der die Querschnittsfläche des Federelements einschliesst.

6. Federnder Dämpfer (4) mit einem Dämpferkörper (5) nach einem der Ansprüche 1 bis 5,
dadurch **gekennzeichnet**,
dass das Dämpferelement (10) und das Federelement (9) im Dämpferkörper (5) in Reihenschaltung zueinander (MAXWELL-Schaltung), parallel zueinander (VOIGT-KELVIN-Schaltung) oder in einer dieser beiden Schaltungen mit entweder vor- oder nachgeschaltetem Dämpferelement (13,14,15) oder mit vor- oder nachgeschaltetem Federelement angeordnet sind.

7. Federnder Dämpfer nach Anspruch 6,
**gekennzeichnet** durch
die Reihenschaltung eines Dämpferkörpers in MAXWELL-Schaltung mit einem Dämpferkörper in VOIGT-KELVIN-Schaltung.

8. Federnder Dämpfer nach Anspruch 7,
**gekennzeichnet** durch
eine Einstellung oder Konstruktion des Federelementes (9) auf einen Federweg von 60% bis 80%, bezogen auf die Bauhöhe des ungedämpften Federelementes.

9. Federnder Dämpfer nach einem der Ansprüche 7 oder 8,
**gekennzeichnet** durch
stoffschlüssig und/oder formschlüssig fest mit dem Dämpferkörper (10) verbundene Kraftanschlussmittel (6,7), die eine Beanspruchung des Dämpfers (4) auf Druck, Zug oder Torsion, auch in Kombination miteinander, zulassen.

10. Federnder Dämpfer nach einem der Ansprüche 7 bis 9,
dadurch **gekennzeichnet**,
dass das Federelement (9) vom Dämpferelement (10) vollständig umschlossen ist.

11. Federnder Anschlagpuffer mit einem Dämpfer nach einem der Ansprüche 7 bis 10, insbesondere für Stahlfedern, speziell Schraubenfedern, mit zumindest im wesentlichen zylindrischer geometrischer Gestalt, durchgehender Zentralbohrung für eine Führungsstange (8) und anwendungsbedingter Aussenkontur, zumeist einer axialen Folge von radial ausgerichteten Ringnuten,
**gekennzeichnet** durch
ein als Zylinderkern ausgebildetes Federelement (9), das von einem als Mantelhülse ausgebildeten Dämpferelement (10) umgeben ist.

12. Federnder Anschlagpuffer nach Anspruch 11,
dadurch **gekennzeichnet**,
dass das Federelement und das Dämpferelement separat vorgefertigte Teile sind, und dass das Dämpferelement unter Vorspannung auf das Federelement aufgespannt ist.

13. Federnder Anschlagpuffer nach Anspruch 11,
dadurch **gekennzeichnet**,
dass das Federelement in die vorgefertigte Dämpferhülse, die als Formwerkzeug-Einlegteil dient, eingespritzt ist.

14. Federnder Anschlagpuffer nach Anspruch 11,
dadurch **gekennzeichnet,**
dass das Federelement in der vorgefertigten Dämpferhülse, die als Formwerkzeug-Einlegteil dient, geschäumt ist.

15. Federnder Anschlagpuffer nach einem der Ansprüche 11 bis 14,
dadurch **gekennzeichnet**,
dass die relative Wandstärke der Dämpferhülse (17) nicht grösser als 15% des Durchmessers des als Kern ausgebildeten Federelementes (9) ist.

16. Federnder Anschlagpuffer nach Anspruch 15 ,
dadurch **gekennzeichnet,**
dass die Dämpferhülse (17) in axialer Folge mit angeformten, insbesondere nach radial auswärts vorspringenden (13,14,15), aber auch sowohl radial auswärts als auch radial einwärts (16) oder auch nur radial einwärts vorspringenden konzentrischen, insbesondere flanschartigen oder scheibenförmigen Ringen ausgeführt ist, so dass die Wandstärke der Dämpferhülse in diesen Ringbereichen grösser als 15% des Durchmessers des als Kern ausgebildeten Federelementes ist.
